# EUROPÄISCHE PATENTSCHRIFT

(11) **EP 1 150 923 B1**
(45) Veröffentlichungstag und Bekanntmachung des Hinweises auf die Patenterteilung: **28.02.2007**
(21) Anmeldenummer: 00993317.7
(22) Anmeldetag: 11.12.2000
(51) Int. Cl.: C02F 5/08, C02F 5/14

(54) **VERFAHREN ZUR ENTFERNUNG VON ABLAGERUNGEN AUS WASSERFÜHRENDEN SYSTEMEN UND EINRICHTUNGEN ZUR WASSERVERSORGUNG**
METHOD FOR REMOVING DEPOSITS FROM WATER TRANSMISSION SYSTEMS AND DEVICES FOR SUPPLYING WATER
PROCEDE POUR ENLEVER DES DEPOTS PRESENTS DANS DES SYSTEMES AQUIFERES ET DES INSTALLATIONS DE DISTRIBUTION D'EAU

(30) Priorität: 10.12.1999 DE 19959592; 02.02.2000 DE 10004581
(43) Veröffentlichungstag der Anmeldung: 07.11.2001
(73) Patentinhaber: R. SPÄNE KG, 79618 Rheinfelden (DE)
(72) Erfinder: NÜRNBERGER, Michael, 93128 Regenstauf (DE); NUSKO, Robert, 93109 Wiesent (DE); MAIER, Georg, 93057 Regensburg (DE)
(74) Vertreter: Andrae, Steffen
(86) Internationale Anmeldenummer: PCT/DE2000/004426
(87) Internationale Veröffentlichungsnummer: WO 2001/042148

(56) Entgegenhaltungen:
- DE-A- 2 520 988
- DE-A1- 3 303 802
- US-A- 5 587 142
- US-A- 5 910 475

## Beschreibung

Die Erfindung betrifft Verfahren zur Entfernung von Ablagerungen aus wasserführenden Systemen und Einrichtungen zur Wasserversorgung, bei dem man die Ablagerungen mit Hilfe einer wäßrigen Behandlungslösung in Lösung bringt und in gelöster Form aus dem System oder der Einrichtung entfernt.

Die Erfindung befaßt sich nicht mit der Verhinderung der Belagbildung, sondern mit der Auflösung von bereits gebildeten Ablagerungen.

Wasserführende Systeme und Einrichtungen zur Wasserversorgung sind im Rahmen der vorliegenden Anmeldung Systeme und Einrichtungen, die mit kaltem Frischwasser gespeist werden, das vorzugsweise aus natürlichen Quellen, z.B. Brunnen oder stehenden oder fließenden Gewässern stammt. Die Einrichtungen zur Wasserversorgung können z.B. der kommunalen Trinwasserversorgung dienen, können jedoch z.B. auch Einrichtung zur Gewinnung von Kühl- oder Prozeßwasser für industrielle Zwecke sein, z.B. für Anwendungen in der chemischen Industrie, der Lebensmittelindustrie, dem Brauereiwesen oder der Energietechnik.

Aus kaltem Frischwasser scheiden sich, unter Beteiligung von Mikroorganismen des Wassers und abhängig von der Herkunft des Frischwassers und seinen mineralischen Inhaltsstoffen, Beläge ab, die als Verockerungen und Versinterungen bezeichnet werden und in regelmäßigen Abständen aus entspechenden Einrichtungen, z.B. Trinkwasserbehältern, Wasserleitungen, Filtern und Brunnen oder aus Anlagen zur Wasseraufbereitung und einzelnen Anlagenabschnitten davon, z.B. einer Oxidationseinrichtung oder einem Abscheidungsreaktor, sowie von darin verwendeten Anlagenteile(n), z.B. entfernt werden müssen, um deren Leistungsfähigkeit sowie die gewünschte Wasserqualität zu sichern. Die Ablagerungen, um die es in der vorliegenden Anmeldung in erster Linie geht, gehören dabei zu den Verockerungen und enthalten als Hauptbestandteile Eisen- und/oder Manganverbindungen oxidischer Natur. Ein besonders wichtiges Anwendungsgebiet der Erfindung liegt in der Brunnenregenerierung.

Bei der Wassergewinnung aus Brunnen kommt es im Lauf der Nutzungszeit u.a. aufgrund der Bildung der genannten Ablagerungen zu verschiedenen Alterungseffekten am Brunnen. Dadurch wird die förderbare Wassermenge geringer. Bei Ablagerungen vom Typ der Verockerungen handelt es sich dabei um Ablagerungen von Eisen- und Manganverbindungen in den Bereichen der Kiesschüttung, der Filterrohrschlitze und im den Brunnen umgebenden, porösen Aquifer. Brunnenockerablagerungen verengen den zum Wasserdurchtritt erforderlichen Porenraum. Aufgrund der überwiegend festen mineralischen Natur des Brunnenockers und seiner Verteilung auf unzugänglichen Materialien ist nach einer mechanisch-hydraulischen Vorreinigung fast immer der Einsatz chemischer Mittel ("Regenerierlösungen") zur Entockerung erforderlich. Zur mechanisch-hydraulischen Vorbehandlung und zur Unterstützung der nachfolgenden chemischen Behandlung sind dabei in der Praxis Vorrichtungen wie Hockdruckreiniger und Kieswäscher im Einsatz, die die Ablösevorgänge und die Verteilung und Umwälzung der Regeneratlösungen im Kiesbett unterstützen. Zum Lösen des Ockers werden gegenwärtig nahezu ausschließlich anorganische Säuren enthaltende Regenerierlösungen eingesetzt. Es wurde jedoch auch schon mit organischen Säuren gearbeitet, z.B. gemäß DE 2 040 546 mit Ascorbinsäure. Organische Säuren verfügen jedoch nicht über das Aufschlußvermögen von hochkonzentrierten Mineralsäuren und haben den weiteren Nachteil, daß sie für Mikroorganismen Nährstoffe darstellen und daher die Wiederverkeimung gereinigter Einrichtungen fördern. Sie sind jedoch in der Regel verträglich mit metallischen und hölzernen Materialien, aus denen die Einrichtungen oder ihre Teile hergestellt sind.

Ein Verfahren, das bei der Trinkwasserbehälterreinigung und Brunnenregerierierung die Praxis der letzten Jahre bestimmt hat, ist das Verfahren gemäß EP 0 113 060 B2, bei dem eine Behandlungslösung zur Anwendung kommt, die sowohl Salzsäure als auch Wasserstoffperoxid enthält. Das Verfahren hat den Vorteil, daß auch die anderweitig nur sehr schwer lösbaren Manganablagerungen schnell und wirksam aufgelöst werden und daß nach der Belagauflösung und Entfernung der gelösten Ablagerungen eine bereits desinfizierte Einrichtung vorliegt.

Pyrotechnische Verfahren, wie z.B. das in DE 198 08 621 A1 dargestellte Verfahren, beschreiten einen völlig anderen Weg in der Brunnensanierung, doch ist die universelle Einsetzbarkeit derartiger Verfahren fraglich.

Die Verwendung von konzentrierten Mineralsäuren zur Brunnenentockerung kann jedoch bei unsachgemäßer Handhabung z.T. erhebliche Gefahren beim Transport und bei der Verwendung bergen. Neben der korrosiven und stark ätzenden Wirkung einer Säure wie konzentrierte Salzsäure können auch ihre Dämpfe massive Reizungen der Atmungsorganen hervorrufen. Darüber hinaus ist die Verwendung der Salzsäure auf solche Brunnen beschränkt, deren Baumaterialien extrem niedrige pH-Werte unter 1,0 ertragen können.

Wasserstoffperoxid ist ähnlich behutsam zu transportieren und zu verwenden wie Salzsäure. Gelangen Verunreinigungen in einen Behälter mit Wasserstoffperoxid, so kann eine katalytische Zersetzung des Peroxids mit starker Gasentwicklung initiiert werden. Auch mit Salzsäure gemischtes Peroxid entwickelt im Lauf der Zeit Gas, so daß eine nicht unerhebliche Gefahr durch falsche Benutzung (vorzeitiges Mischen von Salzsäure und Wasserstoffperoxid) besteht.

Die Verwendung organischer Säuren zum Entockern von Brunnen ist, wie bereits erwähnt, aufgrund der beschränkten Wirkung dieser Substanzen nicht optimal. Ein weiterer ihrer Nachteile ist, daß viele organische Säuren von Mikroorganismen verstoffwechselt werden können, so daß durch den Eintrag organischer Säuren eine Verkeimung des Brunnens gefördert werden kann.

Aus der DE-3 303 802 A ist es ferner bekannt, dass Verockerungen aus wasserbevorratenden und/oder wasserführenden Systemen, insbesondere Brunnen, mit einer Kombination eines nicht ionogenen oberflächenaktiven Mittels und einem Dithionit aufgelöst werden können.

Aus der US 5 587 142 A ist es bekannt, metalloxide mit einer Mischung einer Di- oder Polyphosphonsäure und einem Reduktionsmittel, insbesondere einem Reduktionsmittel auf Schwefelbasis wie Natriumsulfit oder Natriumdithionit, aufzulösen.

Aufgabe der Erfindung ist es, ein Verfahren zur Entfernung von Ablagerungen aus wasserführenden Systemen und Einrichtungen zur Wasserversorgung in form von Brunnen und Trinkwasser behältern, bei dem man die aus kaltem Frischwasser gebildeten Ablagerungen mit Hilfe einer wäßrigen Behandlungslösung in Lösung bringt und in gelöster Form aus dem System oder der Einrichtung entfernt, zu schaffen, bei dem solche Mittel zur Entfernung von Ablagerungen und zur Brunnenentockerung verwendet werden, daß bei neutralen pH-Werten ohne großes Gefährdungspotential beim Transport und der Verwendung gearbeitet werden kann und eine effektive Entfernung von Ablagerungen und Entockerung möglich sind, unabhängig von den Brunnenbaumaterialien und der Ockerzusammensetzung.

Diese Aufgaben werden durch ein Verfahren gemäß Anspruch 1 gelöst.

Vorteilhafte Ausgestaltungen sind den Unteransprüchen zu entnehmen.

Dithionit und Disulfit (Pyrosulfit) in neutraler wäßriger Lösung verfügen über ein großes Aufschlußvermögen gegenüber Brunnenocker. Überwiegend Mn(IV)-haltige Ocker werden unter Reduktion des Mn(IV) zu Mn(II) gelöst. Überwiegend Fe(III)-haltige Ocker werden unter Reduktion des Fe(III) zu Fe(II) aufgelöst und/oder in farblose Krusten umgewandelt, die leichter abgesprengt werden als die ursprünglichen Ablagerungen von Brunnenocker. Dithionitlösungen und Pyrosulfitlösungen bzw. Mischungen dieser Lösungen sind somit ähnlich wirksam wie Mischungen aus Salzsäure und Wasserstoffperoxid. Aufgrund der pH-neutralen Anwendungsmöglichkeit und ihres reduzierenden Charakters sind die erfindungsgemäßen Mittel jedoch auch in Gegenwart von Metallen uneingeschränkt einsetzbar. Korrodierte Metallteile, wie z.B. Leitungen werden durch die erfindungsgemäßen Mittel außerdem gleichzeitig schonend entrostet, womit sich deren Lebensdauer und deren Funktion deutlich steigern läßt. Die Gefahren beim Transport und der Verwendung sind deutlich niedriger als bei der Verwendung von Salzsäure und/oder Wasserstoffperoxid. Das bei der Reaktion mit dem Ocker final entstehende Sulfat ist toxikologisch und ökologisch unproblematisch. Als technische Chemikalien sind Dithionit und Pyrosulfit, v.a. als Natriumdithionit bzw. als Natriumdisulfit (Natriumpyrosulfit), kostengünstig zu erwerben und damit wirtschaftlich in der Anwendung. Aus Regenerierlösungen und Spüllösungen sind Dithionit/Pyrosulfit und deren Reaktionsprodukte - ggf. nach oxidation - durch Fällung zu entfernen. Ein weiterer Vorteil der Verwendung von Dithionit und/oder Pyrosulfit ist deren entkeimende Wirkung.

Es hat sich gezeigt, daß die Wirkung des Reduktionsmittels, d.h. des Dithionits/Disulfits, im Sinne einer Entfernung der Brunnenocker-Ablagerungen verbessert wird, wenn die Behandlungslösung außerdem einen Komplexbildner enthält, und zwar 2-phosphonobutan-1,2,4-tricarbonsäure. Durch die Anwesenheit des Komplexbildners wird verhindert, daß die Umsetzung des Brunnenockers mit dem Reduktionsmittel zur. Ausbildung zu dicker Krusten führt. Es zeigte sich dabei, daß der Komplexbildner den Ablöseprozeß der Bestandteile des Brunnenockers aus den Filterschlitzen und dem Kiesbett deutlich verbessert. Daher wird mit einer Kombination von Reduktionsmittel und Komplexbildner gearbeitet.

Der genannte, an sich bekannten Komplexbildner vom Phosphonsäuretyp hat bei seiner Verwendung zur Brunnenregenerierung den Vorteil, daß er nicht nur toxisch unbedenklich ist, sondern daß er auch nicht vom Stoffwechsel der in kaltem Wasser vorhandenen Mikroorganismen verwertbar ist. Gereinigte Brunnen zeigen daher auch dann, wenn Spuren der Behandlungslösung im Brunnen zurückgeblieben sein sollten, keine merkliche Neigung zu einer (Wieder-)Verkeimung, die nicht selten beobachtet wird, wenn Reste von anderen Bestandteilen einer Behandlungslösung, z.B. von mikrobiell verwertbaren organischen Säuren wie Ascorbinsäure oder Citronensäure, im Brunnen zurückbleiben.

Um den pH-Wert der Behandlungslösung im gewünschten Bereich von etwa 4, 5 bis 9, 5, insbesondere von etwa 6,0 bis 8,0, zu halten, werden in der Behandlungslösung in der Regel außerdem Puffer eingesetzt, und zwar insbesondere Puffer auf der Basis unbedenklicher Salze von schwachen Mineralsäuren. Geeignete Puffersysteme zur Einstellung eines gewünschten pH-Werts können einschlägigen chemischen Nachschlagwerken entnommen werden. Für die Einstellung eines pH-Werts von etwa 6,4 ist das System Hydrogencarbonat/Kohlensäure gut geeignet. Andere Puffersysteme können jedoch ebenfalls eingesetzt werden.

Es hat sich ferner gezeigt, daß es nach einer Regenerierung eines Brunnens nach dem erfindungsgemäßen Verfahren dazu kommen kann, daß der Brunnen relativ schnell wieder an Leistung verliert, und zwar aufgrund einer raschen Neubildung von Ablagerungen. Als Grund dafür konnte ermittelt werden, daß offensichtlich beim Abpumpen der Lösungen, die die aufgelösten Beläge enthalten, im Kiesbett nicht unbeträchliche Mengen an gelösten Eisen- und/oder Manganverbindungen und/oder dunkel verfärbten Eisenablagerungen zurückbleiben. Diese Ablagerungen sind vermutlich Fe(II)/Fe(III)-Mischverbindungen, die leicht oxidiert werden, was dazu führt, daß sich voluminöse Ausfällungen von vermutlich Eisen(III)oxiden/-oxidhydraten/hydroxiden neubilden können, die das Kiesbett blockieren und den Regeneriererfolg relativ rasch zunichte machen.

Dieser unerwünschten Erscheinung kann gemäß einer bevorzugten Ausführungsform des erfindungsgemäßen Verfahrens zur Brunnenregenerierung dadurch begegnet werden, daß man den Brunnen nach dem Abpumpen der verbrauchten Behandlungslösung, die die Bestandteile der aufgelösten Beläge enthält, unter Zugabe eines geeigneten Oxidationsmittels nachbehandelt. Dieses führt dann dazu, daß die Reste an gelösten Eisen- und/oder Manganverbindungen im Kiesbett in Form kompakter dünner Beläge vollständig ausgefällt werden und nicht mehr für die Bildung voluminöser blockierender Niederschläge verfügbar sind. Als Oxidationsmittel wird Wasserstoffperoxid bevorzugt, dessen hohe rasche Wirksamkeit festgestellt wurde und das unbedenklich ist und außerdem eine Desinfektionswirkung besitzt, die eine nachhaltige Keimfreiheit des regenerierten Brunnens gewährleistet.

Führt man das erfindungsgemäße Verfahren unter Verwendung von Dithionit zur Entfernung von Ablagerungen an den Wänden von abgelassenen Trinkwasserbehältern durch, kann es zur Freisetzung von gasförmigem SO₂ kommen, das einen unangenehmen, durchdringenden Geruch besitzt. Es ist in solchen Fällen vorgesehen, der Behandlungslösung SO₂-bindende Bestandteile zuzusetzen. Es ist für eine solche Anwendung auch möglich, eine Behandlungslösung mit viskositätserhöhenden Zusätzen aufzubringen, die das Ablaufen der Behandlungslösung von den zu behandelnden Wänden verzögern und die SO₂-Freisetzung behindern, so daß beim Nachspülen der Wände mit SO₂ bindenden Lösungen oder oxidierend wirkenden Lösungen gearbeitet werden kann und die SO₂-Freisetzung stark vermindert wird.

Die zur Durchführung des erfindungsgemäßen Verfahrens benötigten chemischen Komponenten können in einer beliebigen geeigneten Form in den Verkehr gebracht weden, d.h. als getrennte oder vorgemischte Feststoffe, als Lösungen und Konzentrate oder als Pasten oder Gele. Die Zubereitung der Behandlungslösung kann vor deren Inkontaktbringen mit den zu behandelnden Ablagerungen erfolgen, die Behandlungslösung kann jedoch auch in situ in den zu behandelnden Einrichtungen, z.B. in einem Brunnen oder einem Leitungssystem, bereitet werden, indem die einzelnen Bestandteile zu unterschiedlichen Zeitpunkten zugegeben werden.

Wenn die Ablagerungen von solchen Einzelteilen, z.B. Einzelteilen einer Wasseraufbereitungsanlage, entfernt werden sollen, die der Anlage oder Einrichtung entnommen werden können, kann des erfindungsgemäße Verfahren auch so durchgeführt werden, daß man die von den Ablagerungen zu befreienden, ausmontierten Teile in ein Bad einer erfindungsgemäßen Behandlungslösung legt.

Beispiele, die die Wirkungen des erfindungsgemäßen Verfahrens am Beispiel von Brunnenocker beschreiben, sind im folgenden näher beschrieben.

### Beispiel 1:

### Verwendete Substanzen bzw. Agenzien:

Verwendet wird ein mit Brunnenocker umhüllter Brunnenfilterkies, wobei der Brunnenocker eine feste Schicht von durchschnittlich ca. 2 mm Dicke um die Kieskörner herum (die in einer Korngrößenfraktion von 0,2 bis 0,5 mm vorliegen) bildet. Der Brunnenocker setzt sich in diesem Beispiel chemisch überwiegend aus schwerlöslichen Fe(III)-Verbindungen zusammen. Die ockerumhüllten Kieskörner wurden bei 60 °C auf Gewichtskonstanz vorgetrocknet.

Zum Entfernen des Brunnenockers von den Kieskörnern wird eine frisch angesetzte 10 %ige Lösung von festem Natriumdithionit in Wasser (z.B. 100 g Natriumdithionit pro 1 kg Lösung) verwendet.

### Versuchsdurchführung:

5,00 g der mit Brunnenocker umhüllten, getrockneten Kieskörner werden in 5 ml frisch angesetzte 10 %ige Natriumdithionit-Lösung gegeben. Die Probe (pH-Wert (Anfang) ca. 7) wird dann 16 Stunden lang ohne mechanischen Einfluß (Rühren, Ultraschall o.ä.) bei 20 °C stehengelassen.

Nach Ablauf von 16 Stunden wird die Probe zum Abschälen von locker anhaftendem Brunnenocker gelinde geschüttelt und die übrig gebliebene Ockerprobe (Kieskörner mit Brunnenocker umhüllt) von der flüssigen Phase (restliche Natriumdithionit-Lösung mit abgesprengten Ockerpartikeln) abgetrennt.

Die übrig gebliebenen ockerumhüllten Kieskörner werden auf Gewichtskonstanz getrocknet und zurückgewogen.

### Ergebnis:

Es bleiben 3,30 g ockerumhüllte Kieskörner übrig. Das entspricht einer Abnahme von 34 %, bezogen auf die ursprünglich eingesetzte Filterkiesmenge. Eine deutliche, gravimetrisch nicht erfaßte Menge Brunnenocker verbleibt in Form relativ kleiner Partikel in der Lösung. Diese Partikel wurden während des Versuches von den Filterkieskörnern abgesprengt. Der pH-Wert ändert sich während der Reaktion nicht, oder nur unwesentlich: pH (Ende) ca. 7.

### Vergleich zu dem bisher angewendeten Verfahren :

Eine Reaktionslösung, die 0,3 m HCl (pH_{(Anfang}) ca. 0,5) und 5 % Wasserstoffperoxid enthält, entfernt bei sonst gleichen Versuchsbedingungen (wie Reaktionszeit und -temperatur) etwa 20 % der ursprünglich eingesetzten Filterkiesmenge. Unter Berücksichtigung der Tatsachen, daß die Filterkieskörner aus Ockerhülle und Kieselsteinkern bestehen und sich der Kieselsteinkern unter den gewählten Aufschlußbedingungen nicht löst, fällt der Vergleich des Entockerungspotentials zwischen den beiden Mitteln noch deutlicher zugunsten der erfindungsgemäßen Dithionitlösung aus.

Wird mit einer etwa 3 Gew.-%igen Natriumdihtionitlösaung unter gleichzeitiger Verwendung von ca. 20 mmol/L Phosphonobutan-1,2,4-tricarbonsäure (PBTC) oder Citrat bei einem pH-wert von 6,4 (H₂CO₃/HCO₃⁻ Puffer) gearbeitet, werden noch bessere Ergebnisse erhalten.

### Beispiel 2:

### Verwendete Substanzen bzw. Agenzien:

Verwendet wird ein mit Brunnenocker umhüllter Brunnenfilterkies, wobei der Brunnenocker eine feste Schicht von durchschnittlich ca. 1 mm Dicke um die Kieskörner (die in einer Korngrößenfraktion von 0,2 bis 0,5 mm vorliegen) bildet. Der Brunnenocker setzt sich in diesem Beispiel chemisch überwiegend aus schwerlöslichen Mn(IV)-Verbindungen zusammen. Die ockerumhüllten Kieskörner wurden bei 60 °C auf Gewichtskonstanz getrocknet.

Zum Entfernen des Brunnenockers von den Kieskörnern nach dem erfindungsgemäßen Verfahren wird eine frisch angesetzte 10 %ige Lösung von festem Natriumdithionit in Wasser (100 g Natriumdithionit pro 1 kg Lösung) verwendet.

### Versuchsdurchführung:

5,00 g der mit Brunnenocker umhüllten, getrockneten Kieskörner werden in 5 ml frisch angesetzte 10 %ige Natriumdithionit-Lösung gegeben. Die Probe (pH-Wert (Anfang) ca. 7) wird dann 16 Stunden lang ohne mechanischen Einfluß (Rühren, Ultraschall o.ä.) bei 20 °C stehengelassen.

Nach Ablauf von 16 Stunden wird die Probe gelinde geschüttelt, und die übrig gebliebene Ockerprobe (Kieskörner mit Brunnenocker umhüllt) wird von der flüssigen Phase (restliche Natriumdithionit-Lösung) abgetrennt.

Die übrig gebliebenen ockerumhüllten Kieskörner werden auf Gewichtskonstanz getrocknet und zurückgewogen.

### Ergebnis:

Es bleiben 2,60 g ockerumhüllte Kieskörner übrig. Das entspricht einer Abnahme von 48 %, bezogen auf die ursprünglich eingesetzte Filterkiesmenge. Es verbleibt keine nennenswerte Menge kleiner Partikel in der Lösung. Der vom Filterkies entfernte Ocker wurde somit nach der Reduktion des Mn(IV) zu Mn(II) echt gelöst. Der bei dem v.a. Fe(III)-haltigen Filterkies gemäß Beispiel 1 beobachetet Absprengeffekt konnte hier nicht beobachtet werden. Der pH-Wert ändert sich während der Reaktion nicht, oder nur unwesentlich: pH (Ende) ca. 7.

Auch in diesem Falle bringt die Mitverwendung von Komplexbildnern wie PBTC weitere Verbesserungen.

### Beispiel 3:

### Verwendete Substanzen bzw. Agenzien:

Verwendet wird ein mit Brunnenocker umhüllter Brunnenfilterkies, wobei der Brunnenocker eine feste Schicht von durchschnittlich ca. 2 mm Dicke um die Kieskörner herum (die in einer Korngrößenfraktion von 0,2 bis 0,5 mm vorliegen) bildet. Der Brunnenocker setzt sich in diesem Beispiel überwiegend aus schwerlöslichen Fe(III)-Verbindungen zusammen.

Die ockerumhüllten Kieskörner wurden feucht eingesetzt.

Zum Entfernen des Ockers von den Körnern wird eine frisch angesetzte 3 %ige Lösung von festem Natriumdithionit in Wasser, die zusätzlich 0,1 mol/L PBTC in Form seines Tetranatriumsalzes (Handelsname "Bayhibit S" der Bayer AG) und 0,1 mol/L eines äquimolaren Natriumhydrogencarbonat/Kohlensäurepuffers enthält, verwendet.

### Versuchsdurchführung:

13,00 g des Brunnenockers werden im Inneren eines Kunststoffringes mit 40 mm Innendurchmesser und einer Höhe von 10 mm mittels zweier Kunststoffnetze mit einer Maschenweite von ca. 0,2 mm fixiert. Der ockergefüllte Ring wird ca. 15 mm über dem Boden eines Becherglases befestigt. Zum Entfernen des Ockers von den Körnern werden 80 mL der oben genannten Dithionitlösung zum Brunnenocker gegeben. Die Lösung wird bei Raumtemperatur 24 h lang bei 550 U/min gerührt. Zeitabhängig werden je 0,1 mL der Lösung entnommen, durch 0,2 µm Filter filtriert und auf ihren Eisengehalt hin analysiert.

### Ergebnis:

Nach 2 Stunden Behandlungsdauer wird die maximale Eisenlöslichkeit erreicht. Dabei befinden sich 4200 mg/L Eisen in der Lösung. Bereits nach einer Stunde werden 4100 mg/L Eisen gemessen, womit die rasche Wirkung der Lösung dokumentiert wird. Im weiteren Verlauf fällt der Eisengehalt in der Lösung wieder etwas ab (3900 mg/L nach 24 Stunden). Dieser Abfall kann durch eine Ausfällung von Fe-Salzen erklärt werden, die auf die Erschöpfung der Dithionitlösung zurückzuführen ist.

Das Vorliegen einer wirksamen Dithionitkonzentration kann durch die Entfärbung einer Methylenblaulösung einfach überprüft werden - ist zu wenig Dithionit in der Lösung, so wird das Methylenblau nicht entfärbt. Damit eignet sich Methylenblau zur Verfolgung des Regenerierprozesses, wenn man z.B. während einer Brunnenregenerierung eine zu Prüfzwecken aus dem Brunnen abgepumpte Teilmenge in regelmäßigen Abständen testet.

## Patentansprüche

1. Verfahren zur Entfernung von Ablagerungen aus wasserführenden Systemen und Einrichtungen zur Wasserversorgung in Form von Brunnen und Trinkwasserbehältern, oder von deren Einzelteilen, bei dem man die aus kaltem Frischwasser gebildeten Ablagerungen mit Hilfe einer wäßrigen Behandlungslösung in Lösung bringt und in gelöster Form von dem System oder der Einrichtung oder deren Einzelteilen abtrennt, **dadurch gekennzeichnet, daß** man die Ablagerungen mit Hilfe einer wäßrigen Behandlungslösung bei pH-Werten im Bereich von etwa 4,5 bis 9,5, insbesondere von etwa 6,0 bis 8,0, in Lösung bringt, die eine Kombination enthält aus (i) einem Reduktionsmittel, das ausgewählt ist aus Dithionit und/oder Disulfit, und (ii) 2-Phosphonobutan-1,2,4-tricarbonsäure (PBTC), und deren Salzen, insbesondere Alkalimetallsalzen.

2. Verfahren nach Anspruch 1, **dadurch gekennzeichnet, daß** die Konzentration des Reduktionsmittels in der Behandlungslösung im Bereich von 0,5 bis 25 Gew.-% liegt.

3. Verfahren nach einem der Ansprüche 1 oder 2, **dadurch gekennzeichnet, daß** die Behandlungslösung zusätzlich weitere Bestandteile enthält, die ausgewählt sind aus Puffersalzen, Netzmitteln, Stabilisatoren und/oder weiteren Reduktionsmitteln, die gelöst, emulgiert oder als suspendierte Feststoffe eingebracht vorliegen können.

4. Verfahren nach einem der Ansprüche 1 bis 3, **dadurch gekennzeichnet, daß** die mineralischen Bestandteile der Ablagerungen Oxide und/oder Oxidhydrate und/oder Hydroxide von Eisenmetallen oder Mangan sind.

5. Verfahren nach einem der Ansprüche 1 bis 4, **dadurch gekennzeichnet, daß** man die Ablagerungen mit der Behandlungslösung besprüht und/oder abwäscht oder das System oder die Einrichtung mit der Behandlungslösung befüllt und/oder spült.

6. Verfahren nach einem der Ansprüche 1 bis 5, **dadurch gekennzeichnet, daß** die Einrichtung ein Brunnen ist und das Verfahren so durchgeührt wird, daß man diesen mit einer Behandlungslösung nach Anspruch 1 befüllt, den Brunneninhalt nach der erforderlichen Reaktionszeit mit den in der Behandlungslösung gelösten Ablagerungen abpumpt, wobei diese Behandlung gegebenenfalls ein- oder mehrfach durchgeführt wird, und man den Brunnen mit einer Lösung eines Oxidationsmittels nachbehandelt.

7. Verfahren nach Anspruch 6, **dadurch gekennzeichnet, daß** das zur Nachbehandlung verwendete Oxidationsmittel Wasserstoffperoxid ist.

## Claims

1. Process for removing deposits from water-carrying systems and water supply installations in the form of wells and reservoirs for drinking water, or from their parts, wherein the deposits precipitated from cold fresh water are dissolved with the aid of an aqueous treatment solution and are separated in dissolved form from the system or the installation or their individual parts, **characterized in that** the deposits are dissolved with the aid of an aqueous treatment solution at pH values in the range of from about 4,5 to 9,5, more specially from about 6,0 to 8,0, which solution contains a combination of (i) a reducing agent selected from dithionite and/or disulfite, and (ii) 2-phosphono butane-1,2,4-tricarboxylic acid (PBTC) and its salts, more specially alkali metal salts.

2. Process according to claim 1, **characterized in that** the concentration in the treatment solution of said reducing agent is in the range of from 0.5 to 25 percent by weight.

3. Process according to any of claims 1 or 2, **characterized in that** the treatment solution further contains additional constituents selected from buffer salts, wetting agents, stabilizers, and/or further reducing agents, which constituents are present in dissolved form, emulsified form or incorporated as suspended solids.

4. Process according to any of claims 1 to 3, **characterized in that** the mineralic components of the deposits are oxides and/or oxide hydrates and/or hydroxides of iron metals or manganese.

5. Process according to any of claims 1 to 4, **characterized in that** the deposits are sprayed with the treatment solution and/or washed off, or the system or the installation are filled and/or rinsed.

6. Process according to any of claims 1 to 5, **characterized in that** the installation is a well and the process is carried out by filling it with a treatment solution according to claim 1, pumping out the contents of the well after the required reaction time together with the deposites dissolved in the treatment solution, optionally carrying out said treatment one time or repeatedly, and aftertreating the well with a solution of an oxidant.

7. Process according to claim 6, **characterized in that** the oxidant used for the aftertreatment is hydrogen peroxide.

## Revendications

1. Procédé pour enlever des dépôts présents dans des systèmes aquifères et des installations de distribution d'eau sous forme de puits et de récipients d'eau potable, ou de leurs pièces constitutives, dans lequel on met en solution les dépôts formés dans l'eau fraîche froide, à l'aide d'une solution aqueuse de traitement, et qu'on les sépare du système ou de l'installation ou de leurs pièces constitutives, sous forme dissoute, **caractérisé en ce que** l'on met en solution les dépôts à l'aide d'une solution aqueuse de traitement ayant un pH situé dans l'intervalle allant d'environ 4,5 à 9,5, en particulier d'environ 6,0 à 8,0, qui contient une combinaison de (i) un agent de réduction, qui est choisi parmi le dithionite et/ou le disulfite, et (ii) l'acide 2-phosphonobutane-1,2,4-tricarboxylique (PBTC) et ses sels, en particulier les sels de métal alcalin.

2. Procédé selon la revendication 1, **caractérisé en ce que** la concentration de l'agent de réduction dans la solution de traitement se situe dans l'intervalle allant de 0,5 à 25% en poids.

3. Procédé selon l'une des revendications 1 ou 2, **caractérisé en ce que** la solution de traitement contient en outre, d'autres constituants, qui sont choisis parmi des sels tampons, des agents mouillants, des stabilisants et/ou d'autres agents de réduction, qui peuvent être présents sous forme dissoute, émulsionnée ou en tant que matières solides en suspension.

4. Procédé selon l'une des revendications 1 à 3, **caractérisé en ce que** les constituants minéraux des dépôts sont des oxydes et/ou des oxyhydrates et/ou des hydroxydes du fer métallique ou du manganèse.

5. Procédé selon l'une des revendications 1 à 4, **caractérisé en ce que** l'on pulvérise et/ou lave les dépôts avec la solution de traitement ou **en ce que** l'on remplit et/ou rince le système ou l'installation avec la solution de traitement.

6. Procédé selon l'une des revendications 1 à 5, **caractérisé en ce que** l'installation est un puit et le procédé est réalisé de sorte que l'on remplit celui-ci d'une solution de traitement selon la revendication 1, le contenu du puit est pompé après la période nécessaire de réaction, avec les dépôts dissous dans la solution de traitement, où ce traitement est réalisé le cas échéant, une ou plusieurs fois, et on traite ensuite le puit avec une solution d'un agent d'oxydation.

7. Procédé selon la revendication 6, **caractérisé en ce que** l'agent d'oxydation utilisé pour le traitement ultérieur est le peroxyde d'hydrogène.
